# EUROPEAN PATENT APPLICATION

(11) **EP 4 672 471 A1**
(43) Date of publication of application: **31.12.2025**
(21) Application number: 24872923.8
(22) Date of filing: 25.09.2024
(51) Int. Cl.: H01M 50/367, H01M 50/342, H01M 50/271, H01M 50/211

(54) **BATTERY MODULE**

(30) Priority: 27.09.2023 KR 20230130710
(71) Applicant: LG Energy Solution, Ltd., Seoul 07335 (KR)
(72) Inventor: MOON, Ji Hee, Daejeon 34122 (KR); BANG, Hyun Joong, Daejeon 34122 (KR); CHOI, Won Jung, Daejeon 34122 (KR)
(74) Representative: Plasseraud IP
(86) International application number: PCT/KR2024/014525
(87) International publication number: WO 2025/071215

(57) **Abstract**

Provided is a battery module comprising: a cell stack in which a plurality of battery cells are stacked; a housing which accommodates the cell stack and has one or more venting holes provided therein; and a venting guide member which guides gas generated in the cell stack to flow in a direction toward the one or more venting holes, wherein the venting guide member comprises a body part which is disposed between the venting holes and the cell stack and has a plurality of openings provided therein, and a plurality of guide parts which are disposed between the body part and the cell stack and are in contact with the surface of the cell stack.

## Description

### Technical Field

The present disclosure relates to a battery module.

### Background Art

Secondary batteries can be recharged and discharged, so they are widely used in mobile devices such as digital cameras, cell phones, laptops and so on. Specifically, recently, the secondary batteries have been attracting attention as an energy source for electric vehicles, an energy storage system (ESS) and so on.

As large-capacity and high-output power is required in electric vehicles and the ESS, large-capacity battery apparatus such as battery modules or battery packs that house a plurality of secondary batteries (battery cells) inside a housing are widely used.

With regard to battery apparatuses in which a plurality of secondary batteries are stored, external shock, harsh charging and discharging, and short circuits between secondary batteries may cause high-temperature gases or flames to be generated in some battery cells. Here, when high temperature gas or flames emitted from a battery cell are transferred to adjacent battery cells, a cascading thermal runaway phenomenon may occur within the battery apparatuses.

Therefore, a structure is required that can block high-temperature gas emitted from a battery cell from affecting other battery cells and safely discharge the gas outside the battery apparatus.

### Detailed Description of the Invention

### Technical Goals

The present disclosure is conceived to solve at least some of the problems of the prior art as described above, and provides a battery module having a structure configured to safely discharge gas generated inside the battery module.

Further, the present disclosure is intended to provide a battery module that is configured to block high-temperature gases generated from some battery cells from spreading to other adjacent battery cells along the cell stack.

### Technical solutions

According to various example embodiments of the present disclosure, provided is a battery module including a cell stack in which a plurality of battery cells are stacked, a housing configured to accommodate the cell stack and including one or more venting holes, and a venting guide member configured to guide gas generated in the cell stack to flow toward the one or more venting holes, wherein the venting guide member includes a body part that is placed between the venting holes and the cell stack, and including a plurality of openings, and a plurality of guide parts that are placed between the body part and the cell stack and in contact with the cell stack.

According to an example embodiment, the plurality of guide parts may be formed by a plurality of notches formed by cutting an area of the body part in a plate shape being folded in a direction toward the cell stack.

According to an example embodiment, the plurality of openings are spaces formed in the body part where the plurality of notches have been folded.

According to an example embodiment, the cell stack may further include one or more protecting members that are placed between the plurality of battery cells and face an electrode accommodation part of the plurality of battery cells, and the plurality of guide parts may include one or more first guide parts that are in contact with edges of the protecting members and one or more second guide parts that are in contact with the electrode accommodation part.

According to an example embodiment, the one or more first guide parts and the one or more second guide parts may be placed alternately along a direction in which the plurality of battery cells are stacked.

According to an example embodiment, the plurality of battery cells may include a lead tab extending from the electrode accommodation part in a first direction, and the venting guide member may be placed to face the cell stack in a second direction perpendicular to the first direction.

According to an example embodiment, the plurality of guide parts may protrude in a direction that is from the body part to the cell stack.

According to an example embodiment, the plurality of guide parts may have a length in the first direction that is smaller than a length of the body part in the first direction.

According to an example embodiment, the housing may include a lower part frame where the cell stack is installed, and an upper cover that is connected to the lower part frame and covers an upper portion of the venting guide member, and the one or more venting holes may be placed on the upper cover.

According to an example embodiment, at least a portion of the one or more venting holes may face at least one of the plurality of openings in the second direction.

According to an example embodiment, the battery module may further include a first fixing member configured to fix the body part to an inner surface of the housing.

According to an example embodiment, the first fixing member may include a penetrating part penetrating the housing and a flange provided at an end of the penetrating part, wherein the housing may include a first receiving groove that accommodates the flange in order for the flange not to protrude from a surface of the housing.

According to an example embodiment, the battery module may further include a second fixing member fastened to the penetrating part of the first fixing member, and the body part may include a second receiving groove that accommodates the second fixing member in order for the second fixing member not to protrude from a surface of the body part.

According to an example embodiment, the body part and the plurality of guide parts may be made of aluminum.

### Effects of the Invention

According to the example embodiments, it is possible to implement a battery module configured to safely discharge high-temperature gases generated from battery cells to the outside.

According to the example embodiments, it is possible to provide a battery module configured to prevent high-temperature gases generated from some battery cells from spreading to other adjacent battery cells along the cell stack.

Further, according to the example embodiments, it is possible to guide the gas flow direction inside the battery module in the direction desired by the manufacturer through a venting guide member with a simple structure.

### Brief Description of Drawings

FIG. 1 is a perspective view of a battery module.
FIG. 2 is an exploded perspective view of a battery module.
FIG. 3 is a reference diagram illustrating the configuration of a cell stack included in a battery module.
FIG. 4 is a rear perspective view of a venting guide member before a guide part is formed.
FIG. 5 is a rear perspective view of a venting guide member with a guide part formed.
FIG. 6 is a cross-sectional view along section I-I' of FIG. 1.
FIG. 7 is an enlarged view of a portion A of FIG. 6.
FIG. 8 is a reference drawing for explaining the connection of an upper cover and a venting guide member in a battery module according to an example embodiment.
FIG. 9 is a cross-sectional view of a battery module according to an example embodiment.

### Mode for Carrying Out the Invention

Prior to the detailed description of the present disclosure, terms or words used in the specification and claims should not be construed as limited to their common or dictionary meanings. Further, the terms or words should be interpreted with meaning and concept consistent with the technical idea of the present disclosure based on the principle that the inventor may appropriately define the concept of terms in order to explain his or her invention in the best way. The example embodiments described in this specification and the configurations shown in the drawings are only the most preferred embodiments of the present disclosure, and do not necessarily represent the entire technical idea of the present disclosure. Accordingly, at the time of filing the present disclosure, there may be various equivalents and modifications that can replace them.

The same reference numeral or sign shown in each drawing attached to the specification may represent parts or components that perform substantially the same function. For convenience of description and understanding, different embodiments may be described using the same reference numerals or symbols. In other words, even if a component or an element having the same reference numeral is shown in multiple drawings, the multiple drawings may not all represent one example embodiment.

In the following description, singular expressions include plural expressions unless the context clearly dictates otherwise. It will be understood that, when an element (for example, a first element) is "(operatively or communicatively) coupled with/to" or "connected to" another element (for example, a second element), the element may be directly coupled with/to another element, and there may be an intervening element (for example, a third element) between the element and another element. The terms "have," "may have," "include," and "may include" as used herein indicate the presence of corresponding features (for example, elements such as numerical values, functions, operations, or parts), and do not preclude the presence of additional features.

Further, in the following description, expressions such as an upper side, top, a lower side, bottom, a side, front and a back side are expressed based on the direction shown in the drawing. If the direction of the object changes, it may be expressed differently.

Further, in the specification and claims, terms including ordinal numbers such as "first," "second," etc. may be used to distinguish between components or elements. These ordinal numbers are used to distinguish identical or similar components from each other, and the meaning of the terms should not be interpreted limitedly due to the use of such ordinal numbers. For example, components or elements combined with these ordinal numbers should not be interpreted as having a limited order of use or arrangement based on the number. If necessary, each ordinal number may be used interchangeably.

Hereinafter, example embodiments of the present disclosure will be described in detail with reference to the attached drawings. However, the spirit of the present disclosure may not be limited to the example embodiments. For example, a person skilled in the art who understands the spirit of the present disclosure may suggest other example embodiments that are included within the scope of the spirit of the present disclosure through addition, change, or deletion of components or elements: however, such example embodiments are intended to be included within the scope of the present disclosure. The shapes and sizes of elements in the drawings may be exaggerated for clearer explanation.

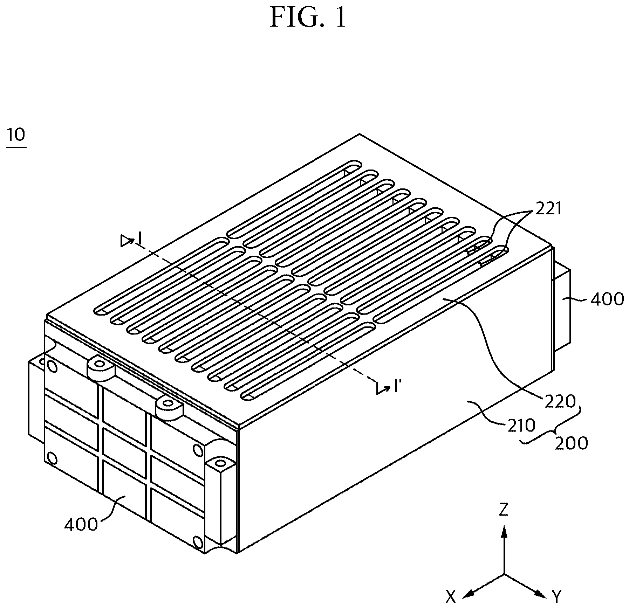

FIG. 1 is a perspective view of a battery module 10.

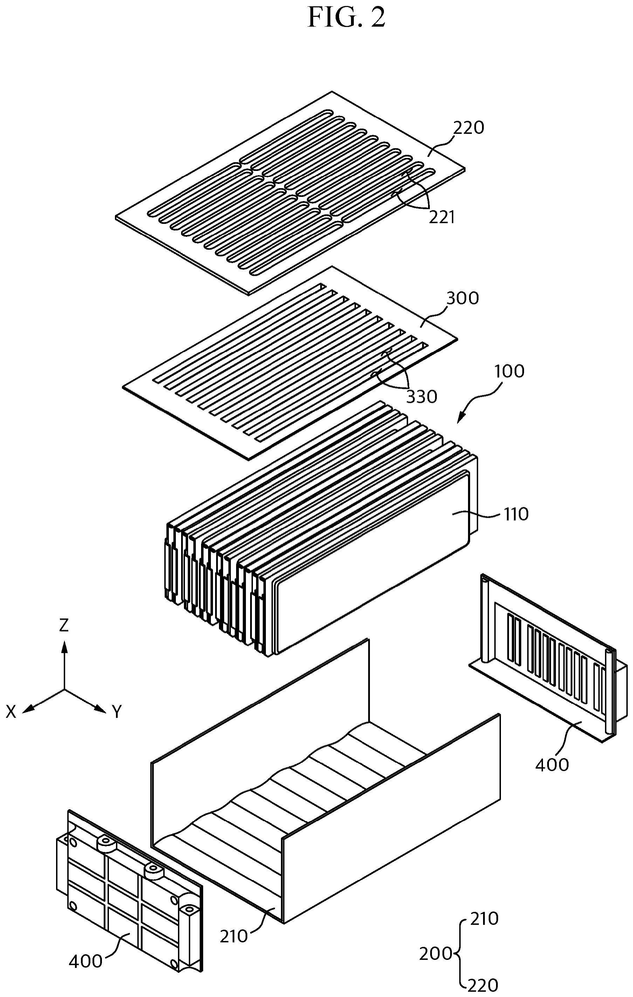

FIG. 2 is an exploded perspective view of the battery module 10.

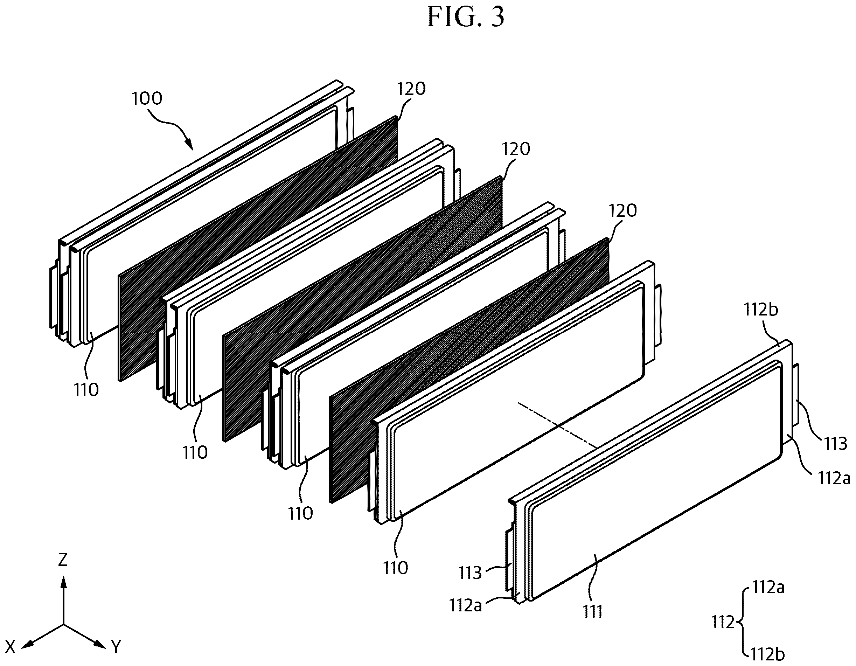

FIG. 3 is a reference diagram illustrating the configuration of a cell stack 100 included in the battery module 10.

The battery module 10 includes a housing 200 having an internal space, a plurality of battery cells 110 accommodated in the internal space, an end cover assembly 400 that is coupled to at least one side of the housing 200 and includes a conductive busbar that is electrically connected to the battery cells 110.

The housing 200 provides the internal space that accommodates one or more cell stacks 100. The housing 200 may be formed of a material having a predetermined stiffness to protect the cell stacks 100 and other components housed in the internal space from external impact. For example, the housing 200 may include a metal material such as iron, stainless steel and aluminum.

The housing 200 may include a lower part frame 210 and an upper cover 220 that are joined to each other. The lower part frame 210 may be configured as a U-shaped frame with the upper and both sides open, in which the cell stack 100 is installed. The upper cover 220 may be configured to be coupled to the open upper portion of the lower part frame 210 to cover the upper surface of the cell stack 100.

However, the structure of the housing 200 is not limited thereto. There is no limit to the structure of the housing 200 as long as it has internal space that may accommodate at least one cell stack 100. For example, the housing 200 may be configured as an integral mono-frame with the upper cover 220 and the lower part frame 210 formed integrally and with both sides open.

The housing 200 may be provided with venting holes 221 through which gas generated in the cell stack 100 may be discharged. For example, referring to FIG. 1 and FIG. 2, the upper cover 220, which is placed on top of the cell stack 100, is provided with one or more venting holes 221, and gas generated in the internal space of the housing 200 may be released to the outside of the battery module 10 through the venting holes 221.

A shielding member (not illustrated) that shields the venting hole 221 may be placed above or below the venting hole 221. The shielding member (not illustrated) may be composed of a thin resin film or sheet, and may block external foreign substances from entering the internal space of the housing 200. In a thermal runaway situation of the battery module 10, the shielding member (not illustrated) may be at least partially torn to allow adequate passage of gases released from the cell stack 100.

The end cover assembly 400 may be attached to one open side of the housing 200. For example, as illustrated in FIG. 2, the end cover assemblies 400 are provided as a pair and may be joined to each open side of the housing 200.

The end cover assembly 400 may have a plurality of conductive busbars arranged thereon, electrically connected to the plurality of battery cells 110 included in the cell stack 100.

The plurality of battery cells 110 accommodated in the battery module 10 may be stacked in one direction (for example, the Y-axis direction of FIG. 2) to constitute at least a portion of the cell stack 100. In the description below, the direction in which the battery cells 110 are stacked is called "cell stacking direction."

In example embodiments, the battery cells 110 forming the cell stack 110 may be secondary batteries that are configured to be charged and discharged. For example, referring to FIG. 3, the battery cells 110 may be pouch-type secondary batteries having an electrode assembly housed inside a sealed pouch.

In the pouth-type second battery 110, the electrode assembly and electrolyte may be accommodated inside a pouch formed by processing one or more other materials. The outer material forming the pouch may be composed of an aluminum laminated film, but the specific material of the outer material is not limited thereto.

The battery cell 110 may include an electrode accommodation part 111 having an internal space in which an electrode assembly is accommodated and a sealing part 112 formed by sealing the outer material at the edge of the electrode accommodation part 111.

The sealing part 112 may include a first sealing part 112a formed at a portion of the edge of the electrode accommodation part 111 where a metallic lead tab 113 electrically connected to the electrode assembly protrudes, and a second sealing part 112b formed at the portion where the lead tab 113 does not protrude. For example, referring to FIG. 3, the battery cell 110 may have a double-ended tab structure in which a pair of lead tabs 113 is extended to both sides of the electrode accommodation part 111. The edge where the lead tab 113 is exposed in the electrode accommodation part 111 may be sealed to form the first sealing part 112a, and the edge where the lead tab 113 is not exposed may be sealed to form the second sealing part 112b. Here, to increase sealing reliability and minimize the area of the sealing part 112, a portion of the second sealing part 112b may be formed in a folded shape at least once.

However, FIG. 2 and FIG. 3 are mere example embodiments of the battery cell 110. The battery cell 110 included in the battery module 10 according to example embodiments is not limited to a pouch-type second battery. For example, the battery cell 110 may be configured as a square second battery with the electrode assembly housed inside a square case having a predetermined rigidity, or a cylindrical second battery with the electrode assembly housed within a cylindrical case.

The cell stack 100 may further include a protecting member 120 configured to protect the plurality of battery cells 110.

For example, the protecting member 120 may be a pressure pad that may apply a predetermined pressure to the battery cell 110 to prevent the battery cell 110 from swelling during charging and discharging. The pressure pad may further include at least one of polyurethane, silicone and rubber (EPDM), and pressurize the battery cell 110 by utilizing the elasticity of these materials.

Alternatively, the protecting member 120 may be an insulating sheet configured to block high-temperature heat energy or flame generated in one battery cell 110 from being transferred to another neighboring battery cell 110. The insulating sheet is made of materials such as mica, silicate and ceramic wool that have excellent flame retardancy, heat resistance and insulating properties, and the insulating sheet may effectively block the heat energy from spreading inside the cell stack 100.

As illustrated in FIG. 3, a plurality of protecting members 120 and the plurality of battery cells 110 may be stacked along the cell stacking direction (for example, the Y-axis direction). However, the quantity of protecting members 120 and the battery cells 110 constituting the cell stack 100 is not limited to what is illustrated in the drawing. The quantity and stacking pattern of the protecting members 120 and the battery cells 110 may be varied as needed.

When a large number of battery cells 110 are stacked inside the battery module 10, there is a risk that an event situation occurring in one battery cell 110 will be transferred to other battery cells 110 in a chain reaction. Specifically, there is a risk that high-temperature gas or flame generated from the battery cell 110 may flow irregularly around the cell stack 100, thereby impacting the battery module 10. Further, as gas or flame flows around the cell stack 100, various heat propagation paths are formed, which may further worsen the thermal runaway situation.

In order to prevent this, the battery module 10 may further include a venting guide member 300 that is placed on one side of the cell stack 100 and guides the heat energy or gas generated in the cell stack 100 to escape stably through the venting holes 221.

The venting guide member 300 may be placed between the cell stack 100 and the housing 200. For example, referring to FIG. 2, the venting guide member 300 is placed between the upper cover 220 provided with the venting holes 221 and the cell stack 100 to guide the gas generated in the cell stack 100 to flow toward the venting holes 221 of the upper cover 220.

When the direction in which the lead tab 113 extends from the battery cell 110 is called the first direction (for example, X-axis direction), the upper cover 220 provided with the venting holes 221 may be arranged along the second direction (for example, the Z-axis direction) perpendicular to the cell stack 100 and the first direction (the X-axis direction).

For example, the second direction may be specified as the direction showing a plurality of interstitial spaces or gaps that may be formed by the plurality of battery cells 110 of the cell stack 100.

Between the upper cover 220 and the cell stack 100, the venting guide member 300 may be placed facing the cell stack 100 in the second direction (the Z-axis direction) for guiding the gas or flame generated in the cell stack 100 to flow in the direction toward the upper cover 220 (for example, the positive direction of Z-axis). In the following description, unless otherwise stated, the first direction (the X-axis direction) may indicate the direction in which the lead tab 113 of the battery cell 110 protrudes in the longitudinal direction of the battery module 10. The second direction (the Z-axis direction) may indicate the direction in which the cell stack 100 and the upper cover 220 face each other in the height direction of the battery module 10.

Meanwhile, the arrangement position of the venting guide member 300 is not limited to what is illustrated in FIG. 2. For example, when the venting holes 221 are provided on the lower surface of the housing 200, the venting guide member 300 may be placed between the lower surface of the cell stack 100 and the lower surface of the housing 200 for guiding the has generated in the cell stack 100 to flow toward the venting holes 221 on the lower surface of the housing 200.

The venting guide member 300 may be positioned along the intended venting direction in the cell stack 100. Here, the venting guide member 300 may be placed between the cell stack 100 and the housing 200. When there are a plurality of intended venting directions for the cell stack 100, the venting guide member 300 may be arranged in at least one of the plurality of directions.

The venting guide member 300 may include a plurality of openings 330 configured to communicate with the venting holes 221 of the housing 200. The gas generated in the cell stack 100 may safely be discharged outside the battery module 10 through the venting holes 221 of the housing 200 through the openings 330 of the venting guide member 300.

In this way, the venting guide member 300 may prevent an unexpected heat propagation path from being generated around the cell stack 100 by guiding the path of gas or flame around the cell stack 100 in a preset direction in a thermal runaway situation of the battery cell 110. For this, at least a portion of the venting guide member 300 may have a structure protruding toward the cell stack 100.

For example, the venting guide member 300 may be positioned such that a plurality of interstitial spaces or gaps formed by a plurality of battery cells in the cell stack are visible when viewed from the venting guide member 300. Accordingly, gas or flame leaking from any battery cell may be guided toward the venting guide member instead of propagating to an adjacent battery cell 110.

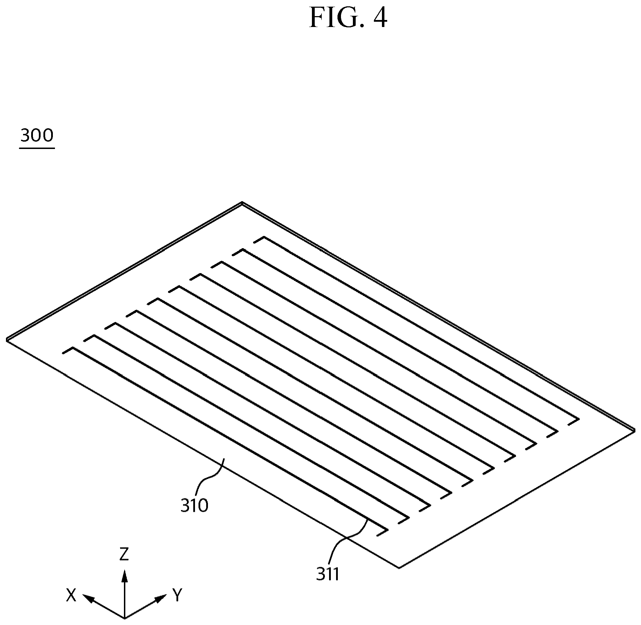

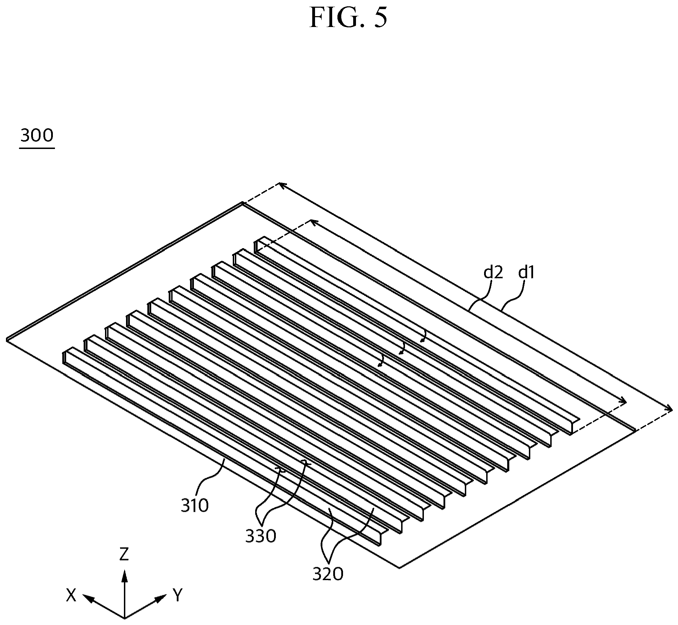

Below, the detailed structure of the venting guide member 300 is described with reference to FIG. 4 and FIG. 5.

FIG. 4 is a rear perspective view of the venting guide member 300 before a guide part 320 is formed.

FIG. 5 is a rear perspective view of the venting guide member 300 with the guide part 320 formed.

The venting guide member 300 described in FIG. 4 and FIG. 5 corresponds to the venting guide member 300 described in FIG. 1 to FIG. 3, and thus repetitive descriptions may be omitted.

The venting guide member 300 may include a body part 310 forming the body of the venting guide member 300, the plurality of openings 330 provided in the body part 310, and a plurality of guide parts 320 that guide gas generated in a cell stack (for example, the cell stack 100 of FIG. 1 to FIG. 3).

The guide part 320 may have a structure protruding from one side of the body part 310. For example, referring to FIG. 5, the guide part 320 may be a partition structure extending downward (for example, in the negative Z-axis direction) from the lower surface of the body part 310.

The plurality of guide parts 320 may be arranged side by side along the cell stacking direction (for example, the Y-axis direction) on one side of the body part 310. The opening 330 may be provided between two adjacent guide parts 320, and accordingly, the gas generated in the cell stack 100 of FIG 1 to FIG. 3 flows between the two guide parts 320 and passes through the venting guide member 300 through the opening 330.

The guide part 320 may be formed by a notch 311 formed in at least a portion of the body part 310 of the plate shape being folded. For example, referring to FIG. 4, the notch 311 is formed by cutting an area of a flat plate member forming the body part 310. As illustrated in FIG. 5, the notch 311 may be folded clockwise or counterclockwise to form the guide part 320. In this case, an empty space formed by folding the notch 311 may be the opening 330 of the venting guide member 300.

As such, the venting guide member 300 configured to guide a gas flow path inside a battery module (for example, the battery module 10 of FIG. 1 and FIG. 2) may be manufactured through a simple process of cutting and folding a portion of the flat plate.

In order to facilitate the manufacturing process, the venting guide member 300 may be made of a metal material suitable for cutting and folding. For example, the venting guide member 300 may be made of an easily formable iron or aluminum alloy. Specifically, the metal materials such as iron and aluminum alloys are easy to form and at the same time, withstand the gases generated in the cell stack 100 without being easily burned or melted, and thus the metal materials may effectively serve as guides for venting paths.

In the venting guide member 300, the length d2 of the guide part 320 in the first direction (the X-axis direction) may be shorter than the length d1 of the body part 310 in the first direction (the X-axis direction).

The body part 310 may be inserted between end cover assemblies (for example, the end cover assemblies 400 of FIG. 1 and FIG. 2) that are coupled to both sides of the housing (for example, the housing 200 of FIG. 1 and FIG. 2), and fixed so as not to move in the first direction (the X-axis direction) of the length of the battery module 10 of FIG. 1 and FIG. 2 inside the housing 200 of FIG. 1 and FIG. 2. Further, since the guide part 320 protruding from the lower surface of the body part 310 has the length d2 shorter than the length d1 of the body part 310, it is possible to avoid physical interference or collision with other components (for example, busbars or various electrical components) placed inside the end cover assemblies 400 of FIG. 1 and FIG. 2.

Further, the length d2 of the first direction (the X-axis direction) of the guide part 320 may be configured to be equal to or longer than the length of the corresponding battery cell 110 in the same direction. This is to effectively reduce the probability of gas or flame propagating in the Y-axis direction by maximally blocking the space between two adjacent battery cells 110.

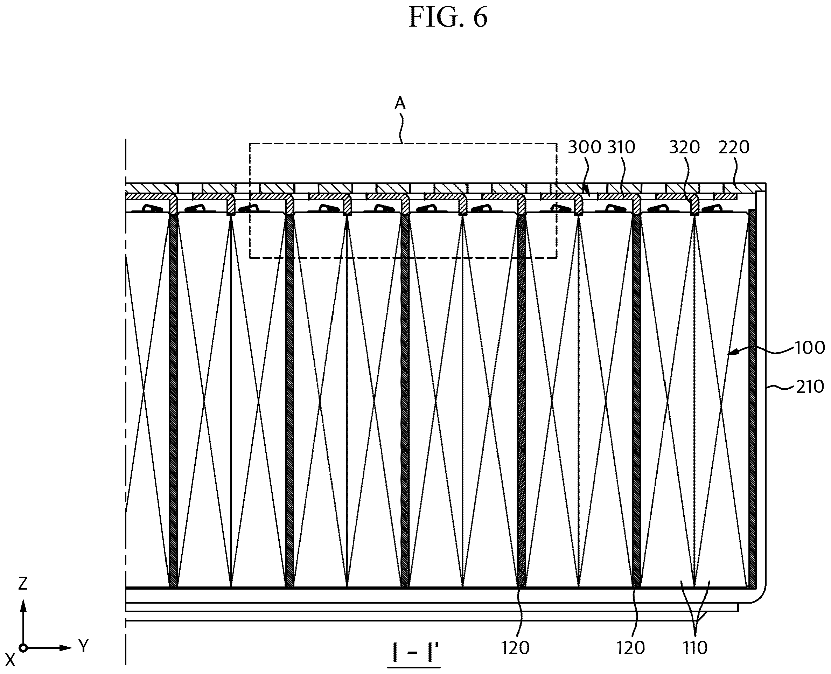

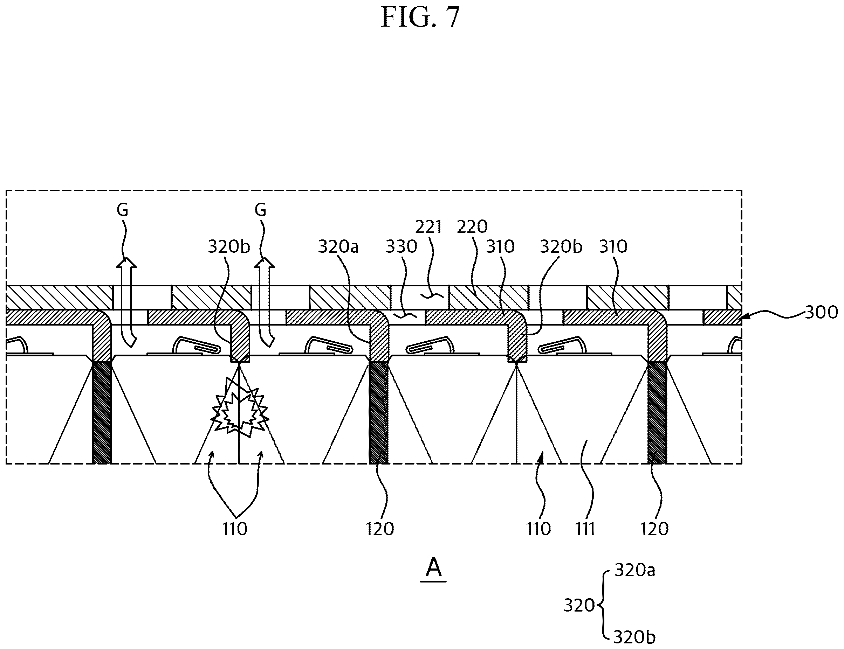

Hereinafter, with reference to FIG. 6 and FIG. 7, the venting path formed inside the batter module 10 by the venting guide member 300 described above will be described in more detail.

FIG. 6 is a cross-sectional view along section I-I' of FIG. 1.

FIG. 7 is an enlarged view of the portion A of FIG. 6.

The battery module 10 described with reference to FIG. 6 and FIG. 7 corresponds to the battery module 10 described previously with reference to FIG. 1 to FIG. 5, and thus repetitive description may be omitted.

The battery module 10 may include the cell stack 100 having a plurality of battery cells 110 and a plurality of protecting members 120 stacked thereon, an upper cover 220 that is placed on the top of the cell stack 100 and has the plurality of venting holes 221, and a venting guide member 300, which is placed between the cell stack 100 and the venting holes 221 and guides the gas flow path.

The venting guide member 300 may include the body part 310 positioned between the venting holes 221 of the housing 200 and the cell stack 100, and the plurality of guide parts 320 protruding from the body part 310 and contacting the surface of the cell stack 100.

The plurality of guide parts 320 may protrude from the body part 310 in the direction toward the cell stack 100. For example, referring to FIG. 7, the guide part 320 protrudes from the body part 310 in the second direction (the Z-axis direction) so that its end may contact the surface of the cell stack 100.

Some of the plurality of guide parts 320 may be in contact with the electrode accommodation part 111 of the battery cell 110, and others may be in contact with the protecting member 120. For example, referring to FIG. 7, the plurality of guide parts 320 may include a first guide part 320a having an edge abutting the protecting member 120 and a second guide part 320b whose edge is in contact with the electrode accommodation part 111 of the battery cell 110. Specifically, the first guide part 320a may form a kind of protective bulkhead that blocks gas and heat transmission vertically across the inside of the battery module 10 by its edge abutting the edge of the protecting member 120.

More actively, the guide part 320 may be configured to pressurize the protecting member 120, which may further improve the reliability of the heat transmission blocking effect.

When the guide part 320 and the protecting member 120 are configured to be in contact or pressurized, the relative lengths of the guide part 320 and the protecting member 120 may be determined based on the size of the opening 330 and the relative size of the venting holes 221 described below. When configuring the downward protrusion length of the guide part 320 to be short, the width of the opening 330 formed by the folding of the notch 311 may be shortened, and according thereto there may not be enough space for the gas or flame to escape. Therefore, the downward protrusion length of the guide part 320 may be made sufficiently long, and the height of the protecting member 120 may be set accordingly.

The first guide part 320a and the second guide part 320b may be arranged alternately along the cell stacking direction (the Y-axis direction). However, this type of alternating arrangement is applicable when two battery cells 110 are stacked between two adjacent protecting members 120, and the arrangement order of the first guide part 320a and the second guide part 320b may be changed in various ways depending on the stacking pattern of the battery cell 110 and the protecting member 120.

The first guide part 320a and the second guide part 320b may server as partitions that divide the space between the cell stack 100 and the upper cover 220 into a plurality of sub-spaces. In other words, gases, flames and combustion particles generated due to the thermal runaway of any one battery cell 110 in the cell stack 100 flow only between the plurality of guide parts 320 arranged above the battery cell 10, and the flow path of the gases, flames and combustion particles may be restricted so that they do not propagate beyond the guide part 320 to the adjacent part.

Gas of which flow in the cell stacking direction is restricted by the guide part 320 may move upward along the surface of the guide part 320 and be discharged outside the battery module 10 through the opening 330 and the venting holes 221. For example, referring to FIG. 7, the openings 330 are arranged between the plurality of guide parts 320 in the body part 310, and at least one area of the venting holes 221 arranged in the housing 200 is arranged to face the openings 330 of the venting guide member 300, and thus the gas moving upward along the surface of the guide part 320 may pass through the openings 330 and the venting holes 221 in sequence and be released outside the battery module 10. In other words, the venting guide member 300 may be arranged between the cell stack 100 and the venting holes 221 of the housing 200, so as to form a gas flow path G extending from the cell stack 100 to the venting holes 221.

The area of the venting holes 221 may be overlapped at least partially by the opening 330 area. Specifically, the area of the venting holes 221 may be configured to include the opening 330 area. In this case, effective discharge is possible by minimizing the effect of gas or flame passing through the venting guide member 300 being blocked by the housing 200, and this may ultimately contribute to reducing the weight of the housing 200.

As such, the venting guide member 300 may block gas or flame form spreading along the cell stacking direction (the Y-axis direction) in the vicinity of the cell stack 100 and guide the gas or flame to flow in the direction toward the venting holes 221 (the Z-axis direction), and thus the venting guide member 300 may prevent a chain reaction of fire inside the battery module 10 caused by gases or flames generated from some battery cells 110.

Meanwhile, the venting guide member 300 may be fixed in position while being sandwiched between the cell stack 100 and the housing 200. For example, referring to FIG. 6 and FIG. 7, the body part 310 of the venting guide member 300 may be in close contact with the lower surface of the upper cover 220, and the guide part 320 protruding from the body part 310 may be in contact with the surface of the cell stack 100. Accordingly, the venting guide member 300 may be fixed such that one side is in contact with the housing 200 (for example, the upper cover 220) and the other side, which is the opposite side, is in contact with the cell stack 100. In other words, the venting guide member 300 may be fixed in a position sandwiched between the housing 200 and the cell stack 100.

However, the fixing structure of the venting guide member 300 is not limited what is described above. For example, in other example embodiments, the venting guide member 300 may be fixed by being connected to the housing 200 via the fixing member.

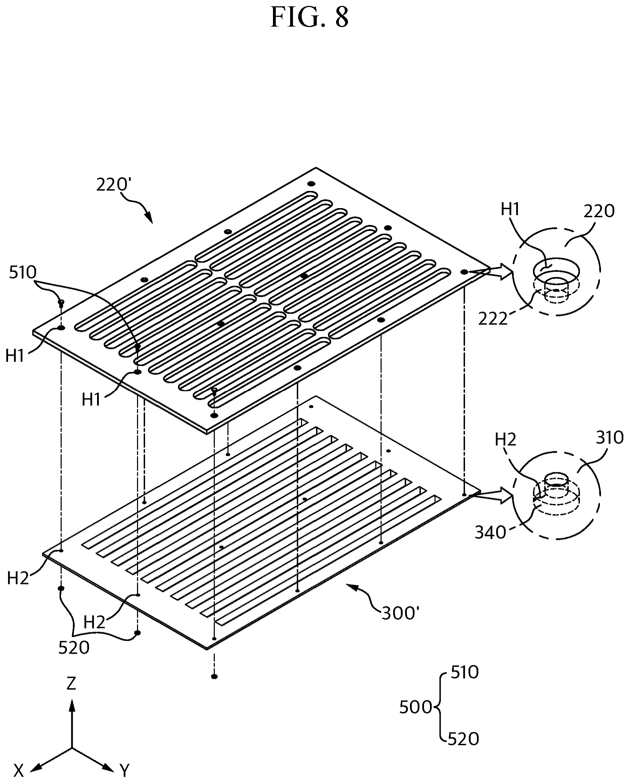

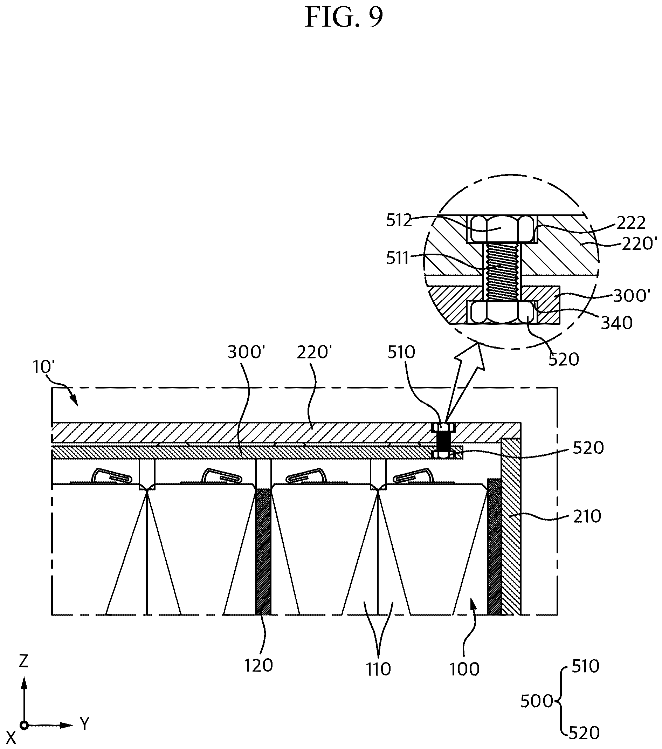

Hereinafter, the battery module 10 further including a fixing member will be described with reference to FIG. 8 and FIG. 9.

FIG. 8 is a reference drawing for explaining the connection of an upper cover 220' and a venting guide member 300' in a battery module 10' according to an example embodiment

FIG. 9 is a cross-sectional view of the battery module 10' according to an example embodiment.

The battery module 10' described with respect to FIG. 8 and FIG. 9 includes all the features of the battery module 10 described with reference to FIG. 1 to FIG. 7, but further includes fixing members 500 configured to fix the position of the venting guide member 300'. Therefore, for features except the features related to the fixing members 500, reference may be made to the descriptions with respect to FIG. 1 to FIG. 7.

The battery module 10' may further include the fixing members 500 configured to fix the venting guide member 300' to an inner surface of the housing 200.

For example, referring to FIG. 8, the fixing members 500 may include a first fixing member 510 that penetrates the upper cover 220' and is connected to the venting guide member 300', and a second fixing member 520 attached to the end of the first fixing member 510. For example, the first fixing member 510 may be a bolt having a penetrating part 511 and a flange 512 formed at the end of the penetrating part 511, and the second fixing member 520 may be a nut that is fastened to the penetrating part 511 of the bolt. However, the composition of the fixing members 500 is not limited to what is described above. For example, the first fixing member 510 may be directly connected to the venting guide member 300' without the second fixing member 520 to mutually fix the upper cover 220' and the venting guide member 300'.

Connection holes H1 and H2 may be provided in the upper cover 220' and the venting guide member 300' to allow the first fixing member 510 to pass through.

Each of the connection holes H1 and H2 of the upper cover 220 and the venting guide member 300 may be positioned so as not to overlap with the venting holes 221 and the opening 330.

The connection holes H1 and H2 may be placed along the edges of the upper cover 220' and the venting guide member 300', but the connection holes may be additionally provided at other locations besides the edges to prevent sagging in the central area. For example, referring to FIG. 8, the connection holes (H1 and H2, etc.) may be arranged in three rows parallel to the first direction (the X-axis direction) in the longitudinal direction and four columns parallel to the cell stacking direction (the Y-direction) in the width direction from the upper cover 220' and the venting guide member 300'.

The venting guide member 300' is firmly fixed to the lower surface of the upper cover 20' by the first fixing member 510 and the second fixing member 520, and the venting guide member 300' may not be dislodged even if the venting guide member 300' is subject to shock due to an external shock to the battery module 10 or an explosion inside the battery module 10.

Meanwhile, in order to prevent the fixing members 500 from protruding further than the surface of the upper cover 220' and the venting guide member 300' from interfering with other components inside and outside the battery module 10', the connection holes H1 and H2 may be provided with receiving grooves 222 and 340 having a sunken structure in order for at least a portion of the fixing members 500 to be accommodated. For example, referring to FIG. 8 and FIG. 9, the first connection hole H1 of the upper cover 220' may be provided with a first receiving groove 222 that accommodates the the flange 512 of the first fixing member 510. Further, a second receiving groove 340 may be provided in the second connection hole H2 of the venting guide member 300' to accommodate the second fixing member 520.

However, in the battery module 10', the fixing structure of the venting guide member 300' is not limited to what is described above. For example, in addition to the above-described fixing members 500, the battery module 10' may further include an adhesive member applied between the venting guide member 300' and the upper cover 220' for fixing the venting guide member.

**In** some example embodiments, the venting guide members 300 and 300' of the battery modules 10 and 10' allow the gas generated in the cell stack 100 to flow toward the direction where the venting holes 221 are arranged (for example, the direction toward the top of the battery modules 10 and 10'), and thus the venting guide members 300 and 300' may guide gas to safely discharge outside the battery modules 10 and 10'.

Further, the venting guide members 300 and 300' may prevent high-temperature gas or flame from flowing along the cell stacking direction around the cell stack 100 in a thermal runaway situation, thereby preventing a chain reaction of ignition within the battery modules 10 and 10'.

Further, the venting guide members 300 and 300' may be mass-produced quickly through a simple process of cutting and folding a flat plate, and thus in manufacturing the battery modules 10 and 10', a structure configured to safely release gas may be added without a complex additional process.

**In** the above, various embodiments of the present disclosure are described in detail. However, it will be apparent to those with average knowledge in the technical field that scope of rights of this disclosure is not limited thereto, and various modifications and variations are possible without departing from the technical spirit of the present disclosure as set forth in the claims. Further, the above-described example embodiment may be implemented with some elements deleted, and each example embodiment may be implemented in combination with each other.

### Description reference numerals

10: Battery module, 100: cell stack
110: battery cell, 120: protecting member
200: housing, 210: lower part frame
220: upper cover, 221: venting hole
222: first receiving groove, 300: venting guide member
310: body part, 311: notch
320: guide part, 330: opening
340: second receiving groove, 400: end cover assembly
500: fixing member, 510: first fixing member
520: second fixing member

## Claims

1. A battery module comprising:
a cell stack in which a plurality of battery cells are stacked;
a housing configured to accommodate the cell stack and comprising one or more venting holes; and
a venting guide member configured to guide gas generated in the cell stack to flow toward the one or more venting holes,
wherein the venting guide member comprises:
a body part that is placed between the venting holes and the cell stack, and comprising a plurality of openings; and
a plurality of guide parts that are placed between the body part and the cell stack and in contact with the cell stack.

2. The battery module of claim 1, wherein the plurality of guide parts are formed by a plurality of notches formed by cutting an area of the body part in a plate shape being folded in a direction toward the cell stack.

3. The battery module of claim 2, wherein the plurality of openings are spaces formed in the body part where the plurality of notches have been folded.

4. The battery module of claim 1, wherein the cell stack further comprises
one or more protecting members that are placed between the plurality of battery cells and face an electrode accommodation part of the plurality of battery cells,
wherein the plurality of guide parts comprise:
one or more first guide parts that are in contact with edges of the protecting members; and
one or more second guide parts that are in contact with the electrode accommodation part.

5. The battery module of claim 4, wherein the one or more first guide parts and the one or more second guide parts are placed alternately along a direction in which the plurality of battery cells are stacked.

6. The battery module of claim 1, wherein the plurality of battery cells comprise a lead tab extending from the electrode accommodation part in a first direction, and
wherein the venting guide member is placed to face the cell stack in a second direction perpendicular to the first direction.

7. The battery module of claim 6, wherein the plurality of guide parts protrude in a direction that is from the body part to the cell stack.

8. The battery module of claim 6, wherein the plurality of guide parts have a length in the first direction that is smaller than a length of the body part in the first direction.

9. The battery module of claim 6, wherein the housing comprises:
a lower part frame where the cell stack is installed; and
an upper cover that is connected to the lower part frame and covers an upper portion of the venting guide member, and
wherein the one or more venting holes are placed on the upper cover.

10. The battery module of claim 9, wherein at least a portion of the one or more venting holes faces at least one of the plurality of openings in the second direction.

11. The battery module of claim 1, further comprising a first fixing member configured to fix the body part to an inner surface of the housing.

12. The battery module of claim 11, wherein the first fixing member comprises:
a penetrating part penetrating the housing; and
a flange provided at an end of the penetrating part,
wherein the housing comprises a first receiving groove that accommodates the flange in order for the flange not to protrude from a surface of the housing.

13. The battery module of claim 12, further comprising a second fixing member fastened to the penetrating part of the first fixing member,
wherein the body part comprises a second receiving groove that accommodates the second fixing member in order for the second fixing member not to protrude from a surface of the body part.

14. The battery module of claim 1, wherein the body part and the plurality of guide parts are made of aluminum.
